# EUROPÄISCHE PATENTSCHRIFT

(11) **EP 2 046 593 B1**
(45) Veröffentlichungstag und Bekanntmachung des Hinweises auf die Patenterteilung: **02.05.2012**
(21) Anmeldenummer: 07786608.5
(22) Anmeldetag: 31.07.2007
(51) Int. Cl.: B60J 5/04, E05F 11/48

(54) **TÜRMODUL MIT FENSTERHEBEREINRICHTUNG**
DOOR MODULE WITH WINDOW REGULATOR DEVICE
MODULE DE PORTE AVEC LEVE-GLACE

(30) Priorität: 31.07.2006 DE 102006036534
(43) Veröffentlichungstag der Anmeldung: 15.04.2009
(73) Patentinhaber: Faurecia Innenraum Systeme GmbH, 76767 Hagenbach (DE)
(72) Erfinder: HERMANN, Marko, 37269 Eschwege (DE); KOELLNER, Harald, 63674 Altenstadt (DE); SCHLIWA, Enrico, 99834 Gerstungen/ OT Lauchröden (DE); AUFMKOLK, Rudolf, 64560 Riedstadt (DE)
(74) Vertreter: Pfenning, Meinig & Partner GbR
(86) Internationale Anmeldenummer: PCT/EP2007/006983
(87) Internationale Veröffentlichungsnummer: WO 2008/015026

(56) Entgegenhaltungen:
- EP-A- 0 385 167
- DE-C1- 19 756 668
- US-A- 5 657 580
- US-A1- 2003 140 562

## Beschreibung

Die Erfindung betrifft ein Türmodul mit einer Fensterhebereinrichtung.

Türmodule mit Fensterhebereinrichtungen gehören grundsätzlich zum Stand der Technik.

Türmodule ermöglichen es, einen Großteil der Komponenten, wie beispielsweise Fensterheber, Türöffner, Crash-Pad und weitere mechanische und elektrische Bauteile oder Installationen, gesondert auf einem zum Türmodul gehörenden Träger zu montieren, wobei der Träger zur Aufnahme verschiedener Komponenten in der Regel eine mechanisch stabile Grundplatte ist. Das Türmodul wird dann als Gesamtsystem in eine Tür bzw. in einen Türrahmen eingefügt.

Zur Aufnahme des Moduls befindet sich in einem zur Tür gehörendem Türrahmen üblicherweise eine über eine Öffnung zugängliche Aussparung, in die das Modul platziert und befestigt wird. Danach werden weitere Komponenten, wie beispielsweise die Türverkleidung, angebracht und die Fensterscheibe eingesetzt.

Die Gestaltung der Aussparung und deren Öffnung ist oftmals eingeschränkt durch die Anforderungen, die an die mechanischen Eigenschaften der Tür gestellt werden. Insbesondere muss ausreichende Stabilität im Falle eines Unfalls gewährleistet sein. Des Weiteren sind die Größe der Aussparung und deren Öffnung oftmals (beispielsweise aufgrund einer schon bestehenden Serie) vorgegeben.

Um Türmodule mit Fensterhebereinrichtungen, welche bekannterweise einen bestimmten Hub der Fensterscheibe ermöglichen müssen und somit einen erheblichen Raumbedarf haben, durch begrenzte Öffnungen bzw. in begrenzte Aussparungen des Türrahmens einsetzen zu können, ist bekannt, Teile der Fensterscheibeneinrichtung verschwenkbar auszuführen.

So offenbaren die Druckschriften DE 101 64 187 A1 und DE 102 39 039 A1 Türmodule mit Fensterhebereinrichtungen, welche verschwenkbare als Schienen ausgebildete Arme aufweisen. In einer Montageposition sind die Schienen eingeklappt, so dass das Türmodul eine minimierte Fläche aufweist bzw. die Schienen nicht über den Rand des Trägers hinausragen. Nach der Montage des Türmoduls im Türrahmen können die Schienen in einer Arbeitsposition ausgeschwenkt werden, um den entsprechenden Hub für die Fensterscheibe zu gewährleisten.

Für die Aufnahme der Fensterscheibe befinden sich an den Schienen Mitnehmer. Des weiteren weisen die in den genannten Druckschriften offenbarten Fensterhebereinrichtungen zum Bewegen des Mitnehmers entlang der Schiene ein linienförmiges, flexibles Element auf, welches durch Umlenkungen an den äußeren Enden der Führungsschienen geführt wird, und welches beim Ausschwenken der Führungsschienen in die Arbeitsposition gespannt wird.

Nachteil dieser Ausführungen ist, dass, um die Schwenkbewegung der Schienen zu ermöglichen, ein entsprechend freier Raum innerhalb des Türrahmens zur Verfügung stehen muss.

Aufgabe der vorliegenden Erfindung ist es deswegen, ein Türmodul mit einer Fensterhebereinrichtung zu schaffen, die auf eine alternative Art und Weise, insbesondere raumsparend, von einer Montageposition in eine Arbeitsposition überführbar ist.

Die Erfindung löst diese Aufgabe durch ein Türmodul nach dem unabhängigen Anspruch.

Dadurch, dass der Arm relativ zum Träger translatorisch von einer Montageposition in eine Arbeitsposition verschiebbar ist, wird für die Überführung des Arms von der Montageposition in die Arbeitsposition nahezu kein zusätzlicher freier Raum benötigt, der diese Bewegung ermöglicht (abgesehen von dem Raum, den der Arm sowieso in seiner Arbeitsposition eingenommen hätte).

Dieses Konzept erlaubt beispielsweise den Einsatz derartiger Türmodule in Türrahmen mit Aussparungen, welche für eine Schwenkbewegung der Arme, wie in den oben schon genannten Druckschriften DE 101 64 187 A1 und DE 102 39 039 A1 offenbart, nicht genügend Raum zur Verfügung stellen, beispielsweise durch Streben verhindern. Ein erfindungsgemäßes Türmodul könnte in diesen Fällen dennoch einsetzbar sein.

Des Weiteren erlaubt diese Art des Aufbaus der Fensterhebereinrichtung eine andere Art des Aufbaus des Türrahmens selbst, da der Raumbedarf des erfindungsgemäßen Türmoduls für die Überführung der Fensterhebereinrichtung von der Montageposition in die Arbeitsposition anders geartet ist.

Das linienförmige, flexible Element ist vorzugsweise ein bowdenloses Kabel, vorzugsweise ein Stahlseil. Grundsätzlich lassen sich auch andersartige linienförmige, flexible Elemente einsetzen, beispielsweise Ketten oder Bänder, insbesondere Gewebebänder, Riemen, oder auch ein Bowdenzug. Alternativ sind auch Scherensysteme verwendbar.

Vorzugsweise wird als Umlenkung eine drehbar am Arm gelagerte Umlenkrolle eingesetzt. Diese befindet sich vorzugsweise am äußersten Ende des Arms, so dass die Länge des Arms für die Bereitstellung des Hubs der Fensterscheibe möglichst vollständig ausgenutzt wird. Alternativ zu einer Umlenkrolle können auch andere Umlenkungen, beispielsweise unbewegliche Elemente mit eingeprägten Führungsnuten verwendet werden.

Die Fensterhebereinrichtung des erfindungsgemäßen Türmoduls kann derart aufgebaut sein, dass der Mitnehmer durch eine Schiene geführt wird.

Vorzugsweise wird die Schiene für die Führung des Mitnehmers zumindest teilweise für die Überführung des Arms von einer Montageposition in die Arbeitsposition mit verwendet. In diesem Fall ist die Führungsschiene des Arms ein Teil der Schiene des Mitnehmers. Hierdurch ist es möglich, eine leichte, Raum sparende Fensterhebereinrichtung zu schaffen.

Es ist aber insbesondere möglich, das erfindungsgemäße Konzept im Rahmen schienenloser Fensterhebereinrichtungen (siehe z.B. DE 10 2004 017 645 A1) umzusetzen. In diesem Falle ist der Mitnehmer nicht mit einer Führungsschiene des Arms verbunden. Die Führung der Fensterscheibe wird auf eine andere Art und Weise gewährleistet, beispielsweise dadurch, dass die Fensterscheibe selbst direkt in eine eigene Führungsschiene eingreift. Im Arbeitszustand führt die Führungsschiene dann zusätzliche den Arm, nicht den Mitnehmer.

Die Erfindung sieht vor, dass in der Montageposition der Arm sich innerhalb des Bereichs des Moduls befindet, und in der Arbeitsposition der Arm mit der Umlenkung über den Rand des Moduls hinausragt.

Dies ermöglicht es, das Türmodul in Aussparungen eines Türrahmens mit einer begrenzten Öffnung einzusetzen.

wird beispielsweise der Bereich bzw. die Fläche des Moduls durch den Träger bestimmt, so befindet sich in der Montageposition der Arm innerhalb der durch den Träger definierten Fläche. In der Arbeitsposition ragt der Arm über den Rand des Trägers hinaus. weitere vorteilhafte Weiterbildungen der Erfindung werden in den abhängigen Ansprüchen beschrieben.

Eine weitere vorteilhafte Weiterbildung der Erfindung sieht vor, dass das Türmodul eine mit dem Träger verbundene Führungsschiene aufweist, auf die oder an der der Arm translatorisch verschiebbar gelagert ist.

Durch eine Führungsschiene kann eine genaue translatorische Bewegung des Arms sowie auch die für den Betrieb der Fensterhebereinrichtung notwendige mechanische Stabilität des Arms gewährleistet werden.

Vorzugsweise wird der Arm durch einen Formschluss senkrecht zur Verschiebungsrichtung des Armes von der Führungsschiene gehalten.

Die Führungsschiene kann Teil des Trägers, insbesondere Bestandteil eines einteiligen Trägers sein. Alternativ können Führungsschiene und Träger getrennte Bauteile sein, die nachträglich miteinander verbunden worden sind. Die erste Möglichkeit bietet sich an, wenn Träger und Führungsschiene aus dem gleichen Material, beispielsweise Kunststoff, hergestellt werden können. So kann beispielsweise bei der Herstellung des Trägers durch einen Spritzgussprozess die Führungsschiene mit vorgesehen werden. Dies hat den Vorteil, dass ein zusätzlicher Arbeitsaufwand für die Herstellung und Befestigung der Führungsschiene entfällt. Eine nachträgliche Befestigung der Führungsschiene am Träger bietet sich beispielsweise für den Fall an, dass Führungsschiene und Träger aus unterschiedlichen Materialien bestehen, beispielsweise dass der Träger aus einem Metall besteht, die Führungsschiene selbst aber aus Kunststoff.

Eine weitere vorteilhafte Weiterbildung der Erfindung sieht vor, dass das Türmodul einen ersten Haltemechanismus aufweist, durch den der Arm in der Montagestellung relativ zum Träger fixiert oder fixierbar ist.

Durch den Haltemechanismus wird gewährleistet, dass der Arm nicht unerwünscht die Montagestellung verlässt.

Eine vorteilhafte Weiterbildung der Erfindung sieht vor, dass der erste Haltemechanismus durch eine Aussparung in der Führungsschiene gebildet wird, in die in der Montageposition eine mit dem Arm fest verbundene Rastnase formschlüssig eingreift.

Durch die Rastverbindung wird eine ungewünschte Verschiebung des Arms unterdrückt. Zusätzlich lässt sich die für das Halten des Armes benötigte Spannung gegen die Raste mittels eines vormontierten linienförmigen Elementes, insbesondere ein Fensterheberseil, halten.

Insbesondere kann die Rastnase elastisch auslenkbar sein, so dass ein Schnappmechanismus vorliegt. Auf. diese Weise kann der Haltemechanismus aufgehoben werden, um beispielsweise den Arm von der Montageposition in die Arbeitsposition zu überführen, aber auch zu einem späteren Zeitpunkt die Montageposition wieder hergestellt werden. Letzteres bietet sich beispielsweise für den Fall an, dass das in eine Tür eingesetzte Türmodul, beispielsweise wegen einer Reparatur, entnommen werden soll.

Grundsätzlich bieten sich eine Vielzahl von Haltemechanismen zur Umsetzung der Fixierung des Arms in der Montageposition an. Alternativ können beispielsweise Bolzen oder Stifte vorgesehen werden, die in korrespondierenden Aussparungen des Arms und der Führungsschiene zur Fixierung des Arms eingeführt, und zur

Aufhebung der Fixierung des Arms den Aussparungen entnommen werden können.

Eine weitere vorteilhafte Weiterbildung der Erfindung sieht vor, dass das Türmodul einen zweiten Haltemechanismus aufweist, durch den der Arm in der Arbeitsposition relativ zum Träger fixiert oder fixierbar ist.

Durch den Haltemechanismus wird gewährleistet, dass der Arm zumindest während der Dauer des Einsatzes der Fensterhebereinrichtung die Arbeitsposition nicht ungewollt verlässt.

Eine weitere vorteilhafte Weiterbildung der Erfindung sieht vor, dass der zweite Haltemechanismus gebildet wird durch eine Aussparung in der Führungsschiene, in der die in der Arbeitsposition eine mit dem Arm fest verbundene Rastnase formschlüssig eingreift.

Ein derartiger Haltemechanismus lässt sich grundsätzlich wie oben beschriebener erster Haltemechanismus umsetzen. Insbesondere kann der Haltemechanismus selbstrastend sein, so dass sich die Rastverbindung beim Verschieben des Arms und Erreichen der Arbeitsposition selbständig herstellt.

Insbesondere lassen sich auch erster Haltemechanismus und zweiter Haltemechanismus kombinieren. So kann die Rastnase des Arms Teil des ersten Haltemechanismus sein, aber auch Teil des zweiten Haltemechanismus, indem sie in der Montageposition des Arms in die erste Aussparung des ersten Haltemechanismus eingreift, und in der Arbeitsposition in die zweite Aussparung des zweiten Haltemechanismus eingreift.

Diese Doppelfunktion lässt sich grundsätzlich auch mit anderen Mitteln umsetzen, beispielsweise durch oben beschriebene Haltemechanismen, welche Bolzen oder Stifte beinhalten.

Eine weitere vorteilhafte Weiterbildung der Erfindung sieht vor, dass das Türmodul ein Kraftübertragungsmittel aufweist, welches beim erstmaligen Einsetzen einer Fensterscheibe in die Fensterhebereinrichtung des Türmoduls und Herunterdrücken der Fensterscheibe die Kraft auf den translatorisch verschiebbaren Arm überträgt, so dass dieser von der Montageposition in die Arbeitsposition überführt wird.

Durch diese vorteilhafte Weiterbildung lässt sich der Arbeitsaufwand bei der Montage der Tür reduzieren: Der zusätzliche Schritt, den Arm aus der Montageposition in die Arbeitsposition zu überführen, entfällt, da dies mit dem Einsetzen einer Fensterscheibe im gleichen Zuge bewirkt wird.

Insbesondere für diese Funktion zeichnet sich der translatorisch verschiebbare Arm aus. Da die Fensterscheibe selbst auch eine translatorische Bewegung ausführt, können hier die Kräfte durch die so genannten Kraftübertragungsmittel unproblematisch, insbesondere mit einfachen Bauteilen, im einfachsten Falle mit einem starren Bauteil, übertragen werden. Dieses Konzept auf schwenkbare Arme umzusetzen ist zwar ebenfalls möglich, erfordert aber, da die Schwenkbewegung des Arms nicht mit der translatorischen Bewegung der Fensterscheibe korrespondiert, einen höheren mechanischen Aufwand.

Je nach der Länge der Verschiebung des Arms und je nachdem zu welchem Zeitpunkt das Kraftübertragungsmittel beim Einsetzen der Fensterscheibe direkt oder indirekt an der Fensterscheibe angreift, kann ein vollständiges Herunterdrücken der Fensterscheibe, oder aber nur ein teilweises Herunterdrücken der Fensterscheibe für die Überführung des Arms von der Montageposition in die Arbeitsposition gegeben sein.

Sollte das Kraftübertragungsmittel bei dem späteren Betriebe der Fensterhebereinrichtung stören, so kann dieses nachträglich entfernt werden. Dies kann beispielsweise manuell geschehen, indem man das Kraftübertragungsmittel dem Türmodul entnimmt, oder über eine Mechanik, durch die sich das Kraftübertragungsmittel eigenständig oder ebenfalls mittels manueller Betätigung aus dem für den Betrieb der Fensterscheibe benötigten Bewegungsbereich entfernen lässt.

Eine weitere vorteilhafte Weiterbildung der Erfindung sieht vor, dass das Übertragungsmittel ein am Arm fixiertes Übertragungselement ist, an welchem der Mitnehmer und/oder die Fensterscheibe zur Übertragung der Kraft angreifen kann.

Eine weitere vorteilhafte Weiterbildung der Erfindung sieht vor, dass das Übertragungselement beweglich am Arm gelagert ist, so dass nach Erreichen der Arbeitsposition des Arms, insbesondere nach einem darauf folgenden erstmaligen Heben der Fensterscheibe, das Übertragungselement aus dem vom Mitnehmer und/oder Fensterscheibe für den Betrieb der Fensterscheibe beanspruchten Bewegungsbereich entfernbar ist.

Eine weitere vorteilhafte Weiterbildung der Erfindung sieht vor, dass das Übertragungselement drehbar auf einer Achse gelagert ist, so dass es aus dem vom Mitnehmer und/oder Fensterscheibe für den Betrieb der Fensterscheibe beanspruchten Bewegungsbereich durch Verschwenken entfernbar ist, oder dass das Übertragungselement verschiebbar auf/in einer Führungsschiene gelagert ist, so dass es für den vom Mitnehmer und/oder Fensterscheibe für den Betrieb der Fensterscheibe beanspruchten Bewegungsbereich durch Verschieben entfernbar ist.

Erfindungsgemäß bevorzugt stellt das Übertragungselement eine starre Verbindung zwischen dem sich in der Montageposition befindenden Mitnehmer und dem sich in der Montageposition befindenden Arm her. Durch die Stellung des Mitnehmers relativ zum Arm wird das Übertragungselement in seiner Position gehalten. Diese Position der Kraftübertragung behält das Übertragungselement bei, bis durch Einsetzen der Fensterscheibe in den Mitnehmer und Herunterdrücken der Fensterscheibe der Arm seine Arbeitsposition erreicht hat. Durch Anheben des Mitnehmers und durch den in seiner Arbeitsposition verbleibenden Arm wird eine Blockierung des Übertragungselements aufgehoben, so dass es aus dem Bewegungsbereich der Fensterscheibe und des Mitnehmers von alleine (beispielsweise über einen Federmechanismus) wegschwenkt.

Die vorliegende Erfindung wird nun anhand eines Ausführungsbeispiels, welches durch mehrere Zeichnungen dargestellt wird, näher erläutert. Dabei zeigt:
- Fig. 1: eine Draufsicht auf einen Ausschnitt einer ersten Ausführungsform eines erfindungsgemäßen Türmoduls mit einer Fensterhebereinrichtung in einer Montagestellung,
- Fig. 2: den Ausschnitt des Türmoduls beim erstmaligen Erreichen der Arbeitsposition,
- Fig. 3: eine Schrägansicht des Ausschnitts des Türmoduls beim erstmaligen Erreichen der Arbeitsposition,
- Fig. 4: eine Seitenansicht des genannten Ausschnitts,
- Fig. 5: eine Unteransicht des genannten Ausschnitts,
- Fig. 6: eine Schrägansicht auf eine zweite Ausführungsform eines erfindungsgemäßen Türmoduls mit einer Fensterhebereinrichtung in einer Arbeitsposition,
- Fig. 7: eine Schrägansicht der Rückseite eines zur Fensterhebereinrichtung gemäß der zweiten Ausführungsform gehörenden Arms mit einer Umlenkung und
- Fig. 8: Türmodulansicht für einen schienenlosen Mitnehmer und einen Arm.

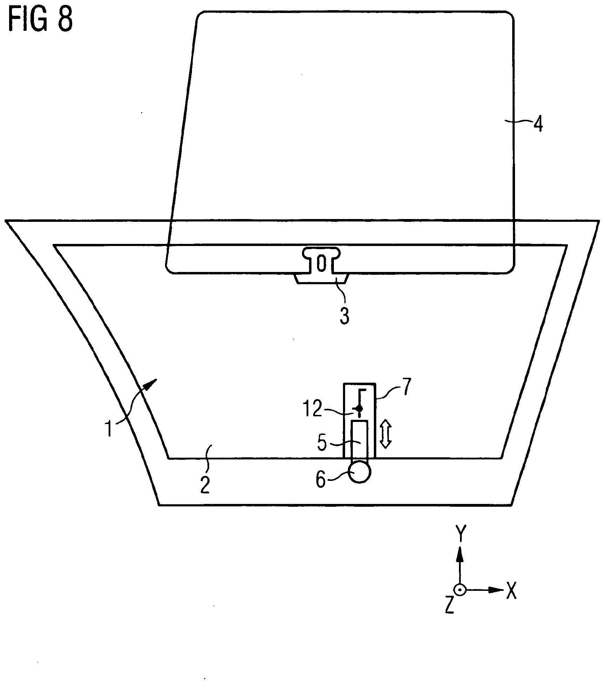

Um die Zuordnung der einzelnen Ansichten zu erleichtern und um die Ausrichtung der Bauteile besser beschreiben zu können, wurde ein gemeinsames Koordinatensystem, welches auf allen Figuren gezeigt ist, eingeführt. Des Weiteren beschreibt "Schiene" eine Schiene, in welcher der Mitnehmer laufen kann, eine Führungsschiene beherbergt immer den Arm. Eine Gesamtansicht ist in Fig. 8 gezeigt.

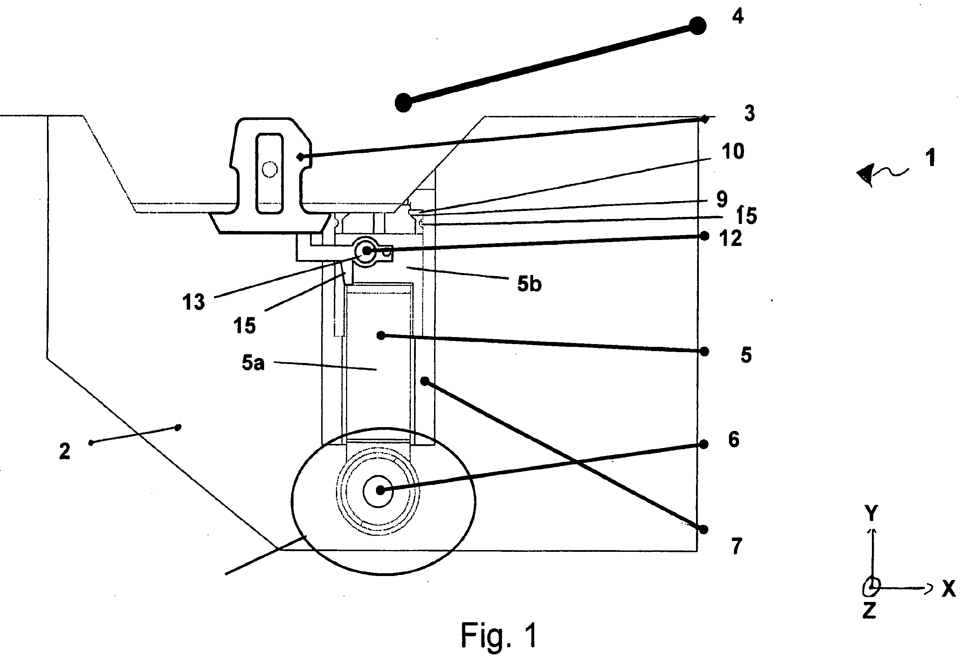

Fig. 1 zeigt eine Draufsicht auf einen Ausschnitt eines erfindungsgemäßen Türmoduls 1 gemäß einer ersten Ausführungsform.

Das Türmoduls 1 weist einen flächigen Träger 2 zur Aufnahme der verschiedenen Komponenten des Türmoduls 1 auf. Unter anderem ist mit dem Träger 2 eine Fensterhebereinrichtung verbunden, die allerdings in Fig. 1 ebenfalls nur ausschnittsweise dargestellt ist. Die Fensterhebereinrichtung weist einen Mitnehmer 3 für eine Fensterscheibe, ein linienförmiges, flexibles Element, welches mit dem Mitnehmer 3 verbunden und über welches der Mitnehmer 3 bewegbar ist (der Übersicht wegen in den Figuren nicht dargestellt), und einen Arm 5 mit einer Umlenkung 6 zur Umlenkung des flexiblen Elements auf.

Die hier dargestellte Fensterhebereinrichtung ist eine schienenlose Fensterhebereinrichtung, d.h., der Mitnehmer 3 wird nicht durch eine Schiene geführt. Die Führung der Fensterscheibe wird durch sich an den Seiten der Fensterscheibe im Türrahmen befindliche Führungsschienen (zumindest hier von der Führungsschiene des Arms 5 verschieden) gewährleistet, in die die Fensterscheibe 4 direkt eingreift.

Der Arm 5 ist in diesem Ausführungsbeispiel als längliches, im Wesentlichen quaderförmiges Element ausgebildet. An seinem äußeren Ende ist durch einen Niet 14 eine Umlenkrolle 6, welche oben genannten Umlenkung darstellt, befestigt, wobei die Umlenkrolle 6 drehbar auf dem Niet 14 gelagert ist.

Das Türmodul 1 weist eine mit dem Träger 2 verbundene Führungsschiene 7 auf, auf der der Arm 5 translatorisch verschiebbar gelagert ist.

Die Führungsschiene 7 ist in diesem Ausführungsbeispiel einteilig mit dem Träger 2 verbunden. Alternativ ist es auch möglich, Führungsschiene 7 und Träger 2 als getrennte Bauteile herzustellen und nachträglich miteinander zu verbinden.

Die Führungsschiene ist in Y-Richtung ausgerichtet. Der Arm 5 lässt sich somit in Y-Richtung verschieben.

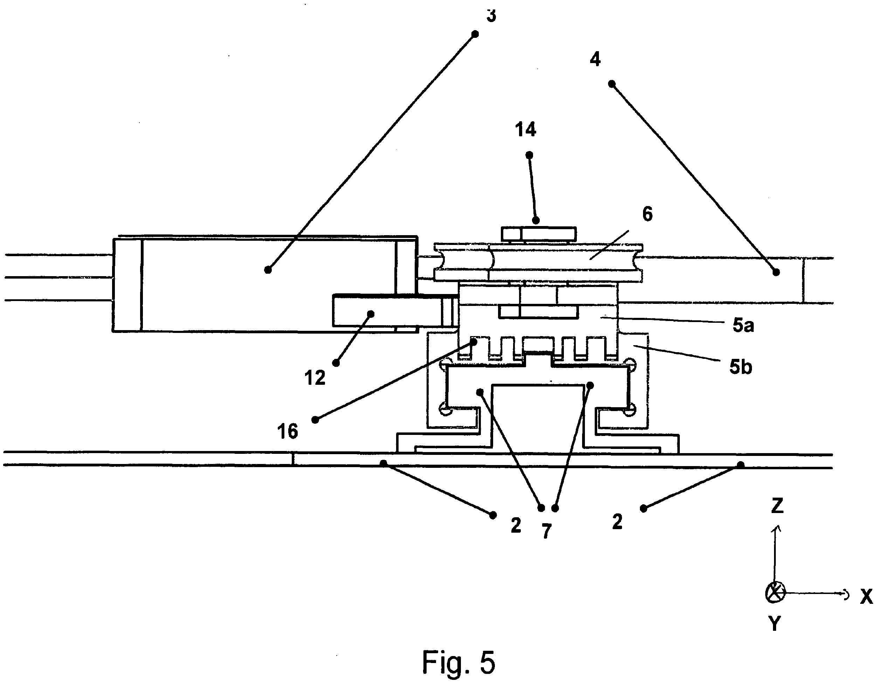

Auf der Führungsschiene 7 wird der Arm 5 mittels einer formschlüssigen Verbindung zwischen Arm 5 und Führungsschiene 7 gehalten. Der Arm 5 ist hierfür in zwei Bereiche 5a und 5b aufgeteilt (siehe Fig. 1 und auch Fig. 5).

Der Bereich 5b des Arms 5 ist mit der Führungsschiene 7 verbunden. Der Abschnitt 5b ist quaderförmig und weist eine nach außen geöffnete, im Querschnitt im Wesentlichen T-förmige, längliche Aussparung auf. In diese Aussparung greift die Führungsschiene 7 mit einem zu der T-förmigen Aussparung korrespondierenden, im Querschnitt T-förmigen, länglichen Steg ein. Auf diese Weise ist der Arm 5 über seinen Abschnitt 5b in der XZ-Ebene formschlüssig auf der Führungsschiene 7 mechanisch stabil gelagert, bleibt aber in Y-Richtung beweglich (siehe hierzu Fig. 5).

Im Gegensatz zu dem Abschnitt 5b, der aufgrund dessen, dass er eine saubere Führung des Arms 5 sowie eine gewisse mechanische Stabilität gewährleisten muss, ist der Abschnitt 5a als schlanker Quader ausgebildet. Der Abschnitt 5a weist zudem an seiner Rückseite, d.h. dem Träger 2 zugewandt, längs verlaufende Rippen 16 auf. Durch die Rippen ist die mechanische Steifigkeit des Abschnitts 5a erhöht. Denkbar wären auch quer verlaufende Rippen, insbesondere um einer Verdrillung des Arms vorzubeugen.

Am äußersten Ende des Abschnitts 5a ist die Umlenkrolle 6 befestigt.

Der Arm 5 befindet sich in der Montageposition, die beispielsweise Fig. 1 zeigt, innerhalb des Bereichs des Moduls, insbesondere innerhalb der Fläche des Trägers 2.

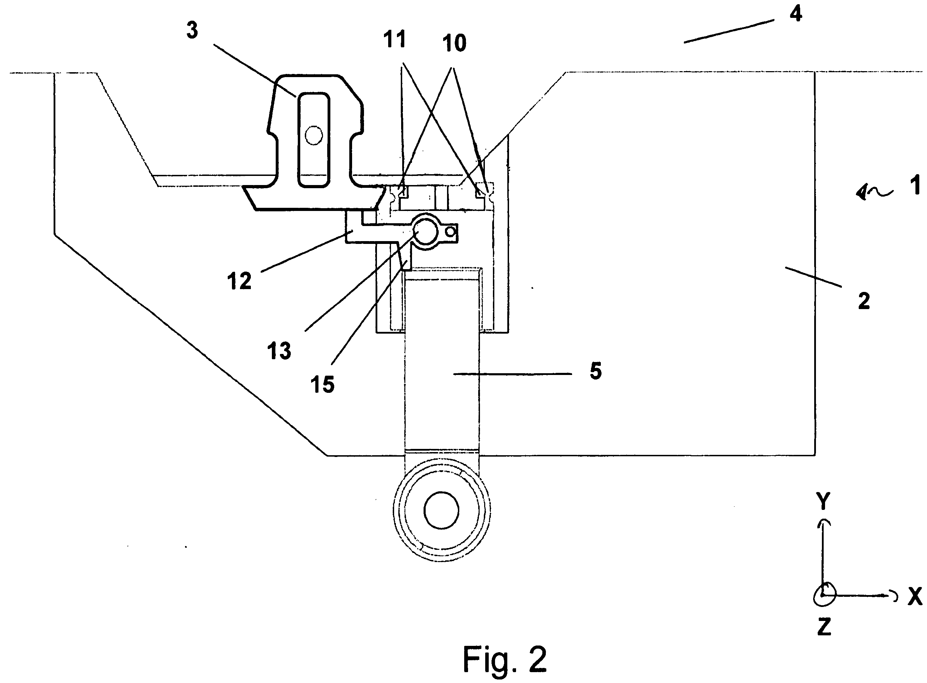

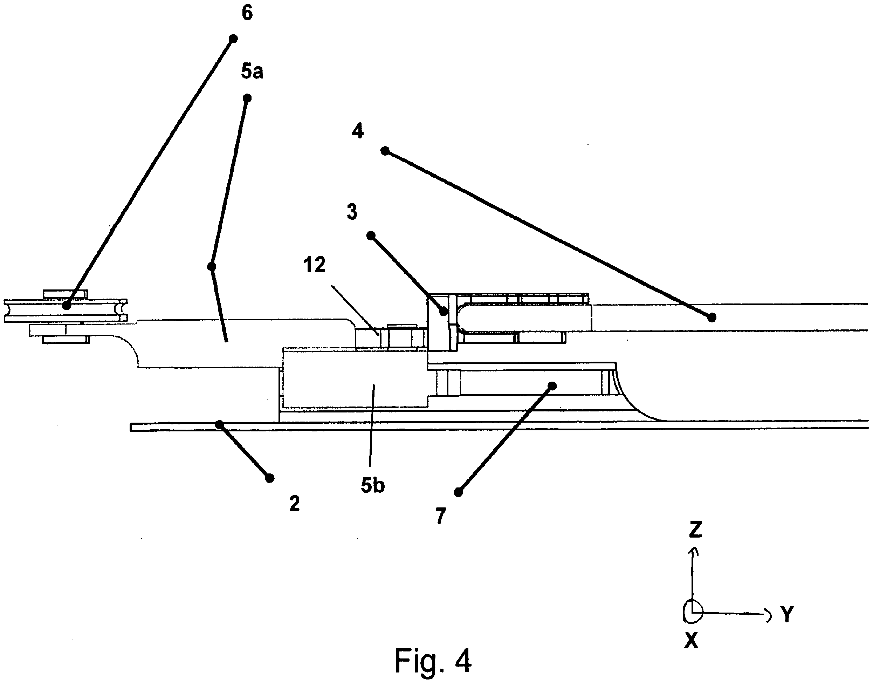

Der Arm 5 lässt sich aus der Montageposition translatorisch in eine Arbeitsposition verschieben, in der der Arm 5 mit der Umlenkung 6 über den Rand des Moduls, hier des Trägers 2, hinausragt (siehe hierzu Fign. 2 - 4 und 8).

Das Türmodul 1 weist einen ersten Haltemechanismus auf, durch den der Arm 5 in der Montagestellung relativ zum Träger 2 fixiert ist.

Der Haltemechanismus wird gebildet durch eine sich am äußeren Ende des Abschnitts 5b des Arms 5 befindende Rastnase 10, die formschlüssig in eine Aussparung 9 der Führungsschiene 7 eingreift (siehe Fig. 1). Die Rastnase 10 ist elastisch beweglich, welches durch eine Kerbe 15 kurz unterhalb der Rastnase 10 im Abschnitt 5b erreicht wird.

Des Weiteren sind die Aussparung 9 und die Rastnase 10 zueinander korrespondierend angeschrägt, so dass bei einem Bewegen des Arms 5 entlang der Führungsschiene 7 in Richtung Arbeitsposition (negativer Y-Richtung) die Rastnase 10 ohne weiteres Dazutun nach außen gebogen wird und die Aussparung 9 verlässt.

Des Weiteren ist jeweils die linke und die rechte Seite der Führungsschiene 7 mit einer Aussparung 9 und dazu korrespondierend jeweils die rechte und die linke Seite des Abschnitts 5b des Arms 5 mit einer Rastnase 10 versehen.

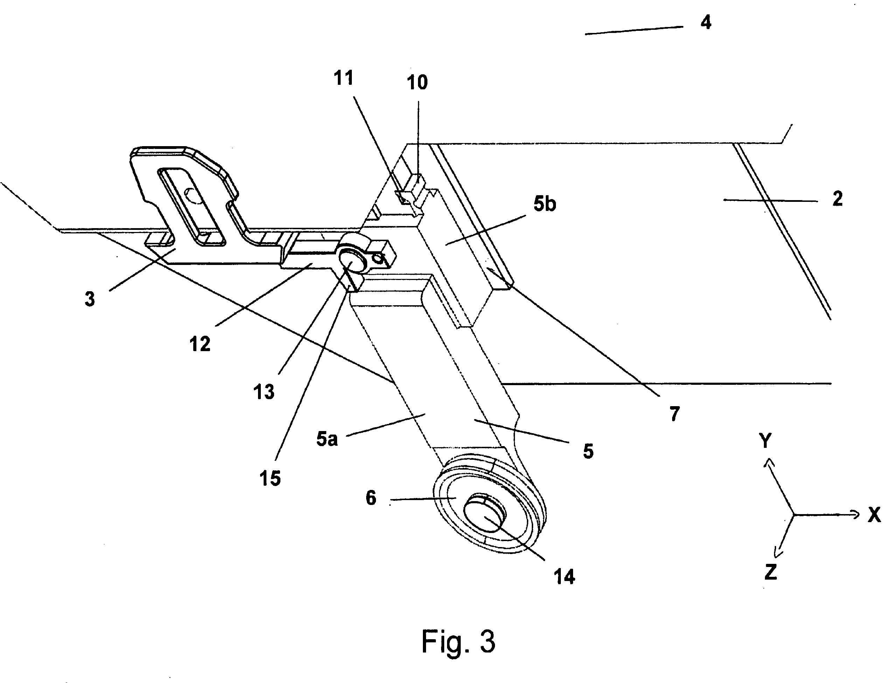

Fig. 2 und Fig. 3 zeigen den in seine Arbeitsposition verschobenen Arm 5.

Das Türmodul 1 weist einen zweiten Haltemechanismus auf, durch den der Arm 5 in der Arbeitsposition relativ zum Träger 2 fixiert ist.

Der zweite Haltemechanismus wird gebildet durch zwei zweite Aussparungen 11, die, entsprechend der Verschiebelänge des Arms 5, unterhalb der Aussparungen 9 an der Führungsschiene 7 angeordnet sind, und in die die Rastnasen 10 beiderseitig eingreifen. Die Seiten der Aussparungen 11 sind allerdings im Gegensatz zu den Seiten der Aussparungen 9 nicht angeschrägt, womit erreicht wird, dass die Rastnasen 10 sich nicht ungewollt aus den Aussparungen 11 entfernen, und somit der Arm 5 seine Arbeitsposition verlassen könnte.

Des Weiteren weist das Türmodul ein Kraftübertragungsmittel auf, welches beim erstmaligen Einsetzen einer Fensterscheibe 4 in die Fensterhebereinrichtung des Türmoduls und Herunterdrücken der Fensterscheibe 4 die Kraft auf den translatorisch verschiebbaren Arm überträgt, so dass dieser von der Montageposition in die Arbeitsposition überführt wird.

In diesem Ausführungsbeispiel ist das Kraftübertragungsmittel ein am Arm 5 fixiertes starres Übertragungselement 12, an welchem der Mitnehmer 3 zur Übertragung der Kraft auf den Arm 5 angreifen kann. Ebenso ist es auch möglich, dass nicht der Mitnehmer 3, sondern die Fensterscheibe am Übertragungselement 12 angreift.

In diesem Ausführungsbeispiel erfolgt die Verschiebung des Arms von der Montageposition in die Arbeitsstellung in Y-Richtung, sowie auch die Verschiebung des Mitnehmers 3 beim Einsetzen der Fensterscheibe und Herunterdrücken der Fensterscheibe in Y-Richtung erfolgt. Grundsätzlich müssen diese beide Verschiebewegen nicht parallel sein, es kann zwischen ihnen auch ein Winkel vorliegen.

Um die volle Länge des Arms 5 ausnutzen sind der Mitnehmer 3, der am unteren Rand der Fensterscheibe 4 angeordnet ist, und der Arm 5 seitlich (in X-Richtung) versetzt angeordnet. Auf diese Weise kann die Fensterscheibe 4 so tief herunter bewegt werden, dass sich der untere Abschnitt des Mitnehmers 3 auf der Höhe der Umlenkrolle 6 befindet. Das versetzte Anordnen von Mitnehmer 3 und Arm 5 entlang der Bewegungsrichtung ermöglicht somit, bei vorgegebener Hubhöhe der Fensterhebereinrichtung, die Minimierung der Länge des Arms und somit die Minimierung von Material und Raumbedarf.

Das Übertragungselement 12 ist an dem Abschnitt 5b des Arms 5 befestigt. Es weist eine L-Form auf, mit dessen einem Ende es den Mitnehmer in seiner Montageposition am Boden kontaktiert (siehe Fig. 1 oder Fig. 3).

Des Weiteren ist das Übertragungselement an dem Arm 5 auf einer Achse 13 gelagert, so dass das Übertragungselement 12 etwa senkrecht zur Ebene, in der die Fensterscheibe 4 liegt (um die Z-Achse), verschwenkbar ist. Um die Kraftübertragung beim Herunterdrücken der Fensterscheibe 4 vom Mitnehmer 3 auf den Arm 5 ohne ein Verschwenken des Übertragungselements 12 zu ermöglichen, weist das Übertragungselement 12 zwischen der Kontaktierung des Bodens des Mitnehmers 3 und der Drehachse 13 einen Steg 15 auf, der an einer durch den Abschnitt 5a gebildeten Erhebung des Arms 5 anliegt und die Drehbewegung gegen den Uhrzeigersinn blockiert. Da der Mitnehmer 3 linksseitig der Achse 13 des Übertragungselements 12 liegt, wird in dieser Stellung von Mitnehmer 3, Verbindungselement 12 und Arm 5 eine Drehbewegung des Übertragungselements 12 vollständig unterdrückt.

Durch Einsetzen der Fensterscheibe 4 in den Mitnehmer 3 und Herunterdrücken der Fensterscheibe wird aufgrund der Kraftübertragung des Übertragungselements 12 auf den Arm 5 beim Herunterdrücken der Fensterscheibe 4 in gleichem Zuge der Arm 5 aus seiner Montageposition gelöst und in die Arbeitsposition überführt. Insbesondere die Fign. 2 und 3 zeigen den Zustand des Türmoduls nach dem erstmaligen Erreichen der Arbeitsposition.

Wird nun die Fensterscheibe 4 über den Mitnehmer 3 angehoben, so verbleiben der Arm 5 und das Übertragungselement 12 in ihren Positionen.

Durch das Anheben des Mitnehmers 3 wird allerdings die Drehbewegung des Übertragungselements 12 im Uhrzeigersinn freigegeben. Ist der Mitnehmer 3 genügend angehoben worden, so kann das Übertragungselement 12 verschwenkt werden. Dadurch ist es möglich, das Übertragungselement 12, welches in seiner anfänglichen Position den vollständigen Hub des Mitnehmers 3 bzw. der Fensterscheibe 4 blockieren würde, aus dem vom Mitnehmer 3 und/oder Fensterscheibe 4 für den Betrieb der Fensterscheibe 4 beanspruchten Bewegungsbereich der Fensterscheibe und/oder des Mitnehmers zu entfernen. Dadurch kann der Mitnehmer 3 später in negativer Y-Richtung bis auf Höhe der Umlenkrolle 6 abgesenkt werden.

In diesem Ausführungsbeispiel ist im Übertragungselementselement 12 ein Federmechanismus integriert. Durch den Federmechanismus wird bewirkt, dass das Übertragungselement 12 bei genügendem Anheben des Mitnehmers 3 selbständig um die Achse 13 aus dem Betriebsbereich der Fensterscheibe und/oder des Mitnehmers sich verschwenkt.

Alternativ zu der hier beschriebenen Möglichkeit einer Drehbewegung um die Z-Achse existieren vielfältige Alternativen, um ein derartiges Übertragungselement aus dem Betriebsbereich zu entfernen. Beispielsweise ist es ebenso möglich, dass das Übertragungselement 12 durch ein Verschieben in X-Richtung aus dem Betriebsbereich entfernt wird. Ebenso möglich sind beispielsweise auch Verschiebungen in Z-Richtung bzw. Schwenkbewegungen um die X-Achse.

In diesem Ausführungsbeispiel sind Träger und Führung einteilig als Spritzgussteil aus einem Kunststoff, hier PP mit Glasfaseranteil, hergestellt. Alternativ ist auch ein mehrteiliger Aufbau möglich.

Der Arm 5 ist ebenfalls ein einteiliges Spritzgussteil aus Kunststoff, hier PP. Auch hier ist ein mehrteiliger Aufbau grundsätzlich möglich.

Sollte die mechanische Stabilität des Arms 5 trotz Rippenkonstruktion nicht ausreichen, so ist es alternativ denkbar, einen Arm mit einer eingebetteten Verstärkung, beispielsweise einer Metalleinlage, einzusetzen.

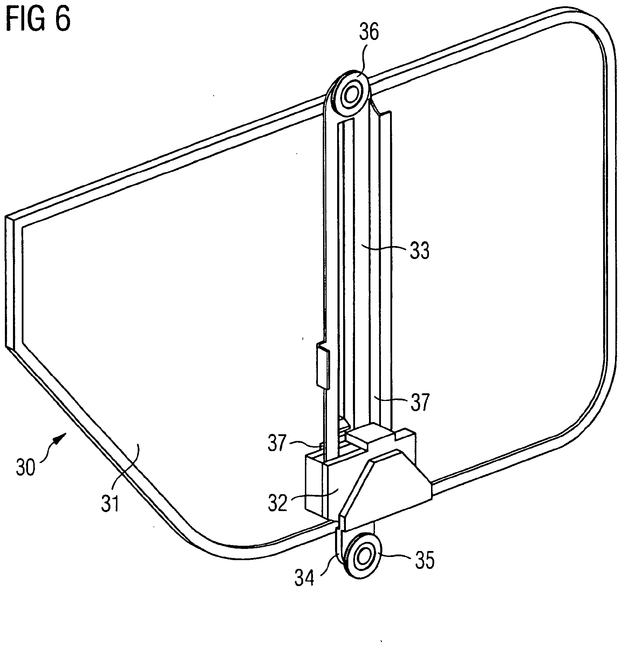

Figur 6 zeigt eine Schrägansicht auf eine zweite Ausführungsform eines erfindungsgemäßen Türmoduls 30 mit einer Fensterhebereinrichtung in einer Arbeitsposition.

Das Türmodul 30 weist einen aus einem verstärkten Kunststoff und Metall bestehenden, plattenförmigen Träger 31 auf, auf den die Fensterhebereinrichtung fest angeordnet ist. Die Fensterhebereinrichtung weist einen Mitnehmer 32 für die Aufnahme und die Bewegung einer Fensterscheibe auf.

Des Weiteren weist in diesem Ausführungsbeispiel die Fensterhebereinrichtung eine vertikal (y-Richtung) verlaufende, auf dem Träger 31 montierte, sich nahezu über dessen gesamte Höhe erstreckende Führungsschiene 33 auf. Der Mitnehmer 32 sitzt auf der Führungsschiene und kann in dieser entsprechend deren Verlauf (also in y-Richtung) verschoben werden, wobei er durch einen Formschluss in der Führungsschiene gehalten wird.

Des Weiteren weist die Fensterhebereinrichtung einen Arm 34 mit einer Umlenkung 35 auf, hier eine über einen Niet befestigte Rolle. Figur 8 zeigt eine Schrägansicht der Rückseite des Arms 34.

Die Führungsschiene ist grundsätzlich wie eine übliche für Fensterhebereinrichtungen zur Führung eines Mitnehmers verwendete Schiene ausgebildet. Sie weist zusätzlich im Bereich ihrer unteren Hälfte Führungsnuten 37 auf, in die der Arm 34 mit jeweils an einer von zwei gegenüberliegenden Seiten liegenden Laschen 38 eingreift. Hierdurch wird der Arm 34 in der horizontalen Ebene (xz-Ebene) durch Formschluss gehalten, ist aber in vertikaler Richtung (y-Richtung) verschiebbar.

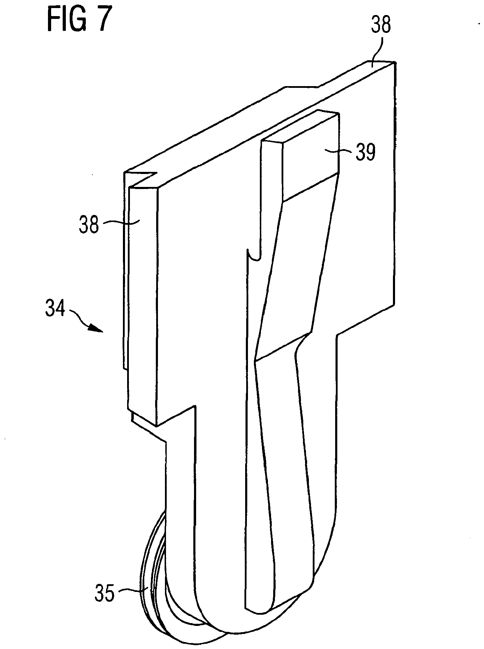

Der Arm 34 weist an seiner Rückseite einer Rastnase 39 auf. Am unteren Ende der Führungsschiene 33 befindet sich eine (hier nicht sichtbare) Rastlasche, in die der Arm 34 über seine Rastnase 39 einrasten kann, wodurch der Arm 34 in seiner Stellung fixierbar ist. Dies ist in Fig. 7 dargestellt.

Gemäß der erfindungsgemäßen Montageposition befindet sich der Mitnehmer 32 am oberen Ende der Führungsschiene 33. Der Arm 34 befindet sich in einer definierten Position unterhalb des Mitnehmers am oberen Ende der Führungsnuten 37, in die er eingreift. In der Montageposition ragt der Arm 34, insbesondere dessen Umlenkung 35, nicht über den Rand des Trägers 31 hinaus.

Über Einsetzen einer Fensterscheibe in den Mitnehmer 32 und Herunterdrücken der Fensterscheibe wird der Mitnehmer 32 entlang der Führungsschiene 33 nach unten verschoben. Mitnehmer 32 und Arm 34 sind derart ausgebildet und derart angeordnet, dass der Mitnehmer in seiner Abwärtsbewegung an den Arm 34 anschlägt und diesen mit nach unten drückt. Erreicht der Arm 34 die Position, in der sich die Rastlasche befindet, wird der Arm 34 in seiner Position fixiert. Der Arm 34 erstreckt sich insbesondere in dieser Position über den Rand des Trägers hinaus. Der Arm 34 ist damit relativ zum Träger 31 von einer Montageposition in eine Arbeitsposition (hier die Position, in der der Arm einrastet) verschoben.

In diesem Ausführungsbeispiel sind Mitnehmer 32 und Arm 34 derart ausgebildet und derart angeordnet, dass der Mitnehmer 32, wenn der Arm 34 seine Arbeitsposition erreicht hat, durch den Arm 34 in seiner Abwärtsbewegung blockiert ist. Der Arm 34 bildet (im Gegensatz zum ersten Ausführungsbeispiel) einen unteren Anschlag für den Mitnehmer 32.

Des Weiteren ist ein linienförmiges, flexibles Element, hier eine Kabel aus Stahl, vorgesehen (nicht gezeigt), welches mit dem Mitnehmer verbunden ist und über welches der Mitnehmer zum Heben und Senken einer Fensterscheibe bewegt werden kann. Das Stahlkabel ist einerseits um die Umlenkung 35 des Armes 34 geführt, und andererseits um eine zweite Umlenkung 36, hier ebenfalls eine über einen Niet befestigte Rolle, die sich am anderen Ende der Führungsschiene befindet.

In der Montageposition ist vorzugsweise das linienförmige, flexible Element schon um die vorhandenen Umlenkungen geführt und mit dem Mitnehmer verbunden, um eine nachträgliche Anordnung des flexiblen Elements und/oder ein nachträgliches Spannen zu vermeiden (was aber grundsätzlich ebenfalls möglich wäre). Das linienförmige, flexible Element ist dabei genügend straff gespannt, um zu verhindern, dass es sich von den Umlenkungen ablöst und/oder sich in einer für die Montage des Türmoduls störenden Position befindet.

In diesen Ausführungsbeispielen ist das jeweilige linienförmige, flexible Element mit einem Ende fest mit dem Mitnehmer 3 bzw. 32 verbunden, geht von da aus nach unten, wird zunächst durch die Umlenkungen 6 bzw. 35 umgelenkt, über gegebenenfalls weitere Umlenkungen nach oben geführt, und von oben über eine weitere Umlenkung (im zweiten Ausführungsbeispiel Umlenkung 36), zum Mitnehmer 3 bzw. 32 zurückgeführt.

In der Montageposition ist das eine Ende des linienförmigen, flexiblen Elements fest mit dem Mitnehmer verbunden, am anderen Ende des linienförmigen Elementes ist der Mitnehmer unter Belassung einer ausreichenden Überlänge mit dem Seil leicht verklemmt, so dass das linienförmige Element genügend straff gespannt ist. Die Überlänge ist dabei auf der Strecke, über die der Arm 5 bzw. 34 mit den Umlenkungen 6 bzw. 35 zu bewegen ist, abgestimmt.

Durch Herunterdrücken des Mitnehmers beim Überführen des Arms 5 bzw. 34 von der Montageposition in die Arbeitsposition rutscht der "Überschuss" des linienförmigen Elementes nach, wobei aufgrund der Klemmwirkung die Spannung im flexiblen Element beibehalten wird.

Das zweite Ende des linienförmigen Elementes, also das Ende der Überlänge, ist verdickt. Ist die Überlänge abgebaut, trifft die Verdickung auf den Mitnehmer und wird dort durch einen Anschlag am Durchrutschen blockiert. Gleichzeitig erreicht der Arm 5 bzw. 34 seine Endposition. Die Anordnung befindet sich in der Arbeitsposition.

In Fig. 8 ist eine Gesamtansicht einer mit schienenlosen Mitnehmern gezeigt. Das Türmodul 1 weist einen flächigen Träger 2 zur Aufnahme der verschiedenen Komponenten auf. Der Mitnehmer 3 ist mit einer Fensterscheibe 4 verbunden, welche im geschlossenen Zustand ist. Aus dieser Figur wird klar, dass der Mitnehmer 3 und der Arm 5 nicht fest miteinander verbunden sind.

Am unteren Rand ist der Arm 5 in der Arbeitsstellung gezeigt, Der Arm 5 verläuft in der Führungsschiene 7. In der Arbeitsstellung befindet sich der Arm 5, insbesondere die Umlenkrolle 6 außerhalb des Türmoduls, so dass ein nicht dargestelltes Drahtseil durch die Überführung von Montageposition in Arbeitsstellung gespannt werden würde.

Weiterhin ist das Übertragungsmittel 12 in einer verschwenkten Position gezeigt, Somit kann der Mitnehmer 3 bei Öffnen des Fensters in negativer Y-Richtung bis auf die Höhe der Umlenkrolle 6 abgesenkt werden.

## Patentansprüche

1. Türmodul (1, 30) mit einem Träger (2, 31) und einer mit dem Träger (2, 31) verbundenen Fensterhebereinrichtung, wobei die Fensterhebereinrichtung einen Mitnehmer (3, 32) für eine Fensterscheibe (4), ein linienförmiges, flexibles Element, welches mit dem Mitnehmer (3, 32) verbunden und über welches der Mitnehmer (3, 32) bewegbar ist, und einen Arm (5, 34) mit einer Umlenkung (6, 35) zur Umlenkung des flexiblen Elements aufweist,
wobei der Arm (5, 34) relativ zum Träger (2, 31) translatorisch von einer Montageposition in eine Arbeitsposition verschiebbar ist **dadurch gekennzeichnet, dass** in der Montageposition der Arm (5, 34) sich innerhalb des Bereichs des Moduls befindet, und dass in der Arbeitsposition der Arm (5, 34) mit der Umlenkung (6, 35) über den Rand des Moduls hinausragt.

2. Türmodul nach einem der vorhergehenden Ansprüche, **dadurch gekennzeichnet, dass** das Türmodul eine mit dem Träger (2, 31) verbundene Führungsschiene (7, 33) aufweist, auf die oder an der der Arm (5, 34) translatorisch verschiebbar gelagert ist.

3. Türmodul nach einem der vorhergehenden Ansprüche, **dadurch gekennzeichnet, dass** das Türmodul einen ersten Haltemechanismus aufweist, durch den der Arm (5) in der Montagestellung relativ zum Träger (2) fixiert oder fixierbar ist.

4. Türmodul nach Anspruch 3, **dadurch gekennzeichnet, dass** der erste Haltemechanismus gebildet wird durch eine erste Aussparung (9) in der Führungsschiene (7), in die in der Montageposition eine mit dem Arm (5) fest verbundene Rastnase (10) formschlüssig eingreift.

5. Türmodul nach einem der vorhergehenden Ansprüche, **dadurch gekennzeichnet, dass** das Türmodul einen zweiten Haltemechanismus aufweist, durch den der Arm (5, 34) in der Arbeitsposition relativ zum Träger (2, 31) fixiert oder fixierbar ist.

6. Türmodul nach Anspruch 5, **dadurch gekennzeichnet, dass** der zweite Haltemechanismus gebildet wird durch eine zweite Aussparung (11) in der Führungsschiene (7, 33), in die in der Arbeitsposition eine mit dem Arm (5, 34) fest verbundene Rastnase (10, 39) formschlüssig eingreift.

7. Türmodul nach einem der vorhergehenden Ansprüche, **dadurch gekennzeichnet, dass** das Türmodul ein Kraftübertragungsmittel (12) aufweist, welches beim erstmaligen Einsetzen einer Fensterscheibe (4) in die Fensterhebereinrichtung des Türmoduls und Herunterdrücken der Fensterscheibe (4) die Kraft auf den translatorisch verschiebbaren Arm (5) überträgt, so dass dieser von der Montageposition in die Arbeitsposition überführt wird.

8. Türmodul nach Anspruch 7, **dadurch gekennzeichnet, dass** das Übertragungsmittel ein am Arm (5) fixiertes Übertragungselement (12) ist, an welchem der Mitnehmer (3) und/oder die Fensterscheibe (4) zur Übertragung der Kraft angreifen kann.

9. Türmodul nach Anspruch 8, **dadurch gekennzeichnet, dass** das Übertragungselement beweglich am Arm (5) gelagert ist, so dass nach Erreichen der Arbeitsposition des Armes, insbesondere nach einem darauf folgendem erstmaligen Heben der Fensterscheibe oder des Mitnehmers, das Übertragungselement aus dem vom Mitnehmer (3) und/oder Fensterscheibe (4) für den Betrieb der Fensterscheibe (4) beanspruchten Bewegungsbereich entfernbar ist.

10. Türmodul nach Anspruch 9, **dadurch gekennzeichnet, dass** das Übertragungselement drehbar auf einer Achse (13) gelagert ist, so dass es aus dem vom Mitnehmer (3) und/oder Fensterscheibe (4) für den Betrieb der Fensterscheibe (4) beanspruchten Bewegungsbereich durch Verschwenken entfernbar ist, oder dass das Übertragungselement verschiebbar auf/in einer Führungsschiene gelagert ist, so dass es aus dem vom Mitnehmer (3) und/oder Fensterscheibe (4) für den Betrieb der Fensterscheibe (4) beanspruchten Bewegungsbereich durch Verschieben entfernbar ist.

## Claims

1. A door module (1, 30) having a carrier (2, 31) and a window regulator device connected to the carrier (2, 31), wherein the window regulator device has a driver (3, 32) for a window pane (4), a linear, flexible element which is connected to the driver (3, 32) and via which the driver (3, 32) is movable, and an arm (5, 34) having a deflector(6, 35) for deflecting the flexible element,
wherein the arm (5, 34) is displaceable in translation relative to the carrier (2, 31) from an assembly position into a working position,
**characterised in that**
the arm (5, 34) is located within the region of the module in the assembly position; and **in that** the deflector (6, 35) of the arm (5, 34) projects beyond the border of the module in the working position.

2. A door module in accordance with one of the preceding claims, **characterised in that** the door module has a guide rail (7, 33) which is connected to the carrier (2, 31) and onto which or at which the arm (5, 34) is supported displaceably in translation.

3. A door module in accordance with one of the preceding claims, **characterised in that** the door module has a first holding mechanism by which the arm (5) is fixed or can be fixed relative to the carrier (2) in the assembly position.

4. A door module in accordance with claim 3, **characterised in that** the first holding mechanism is formed by a first cut-out (9) in the guide rail (7) into which a latching nose (10) fixedly connected to the arm (5) engages in a form-fitting manner in the assembly position.

5. A door module in accordance with one of the preceding claims, **characterised in that** the door module has a second holding mechanism by which the arm (5, 34) is fixed or can be fixed relative to the carrier (2, 31) in the working position.

6. A door module in accordance with claim 5, **characterised in that** the second holding mechanism is formed by a second cut-out (11) in the guide rail (7, 33) into which a latching nose (10, 39) fixedly connected to the arm (5, 34) engages in a form-fitting manner in the working position.

7. A door module in accordance with one of the preceding claims, **characterised in that** the door module has a force transmission means (12) which transmits the force onto the arm (5) displaceable in translation on a first insertion of a window pane (4) into the window regulator device of the door module and the pressing down of the window pane (4) so that said arm is moved from the assembly position into the working position.

8. A door module in accordance with claim 7, **characterised in that** the transmission means is a transmission element (12) which is fixed to the arm (5) and at which the driver (3) and/or the window pane (4) can engage for transmitting the force.

9. A door module in accordance with claim 8, **characterised in that** the transmission element is movably supported at the arm (5) so that after reaching the working position of the arm, in particular after a first raising of the window pane or of the driver following thereon, the transmission element can be moved out of the movement region taken up by the driver (3) and/or by the window pane (4) for the operation of the window pane (4).

10. A door module in accordance with claim 9, **characterised in that** the transmission element is rotatably supported on an axle (13) so that it can be removed from the movement region taken up by the driver (3) and/or by the window pane (4) for the operation of the window pane (4) by pivoting; or **in that** the transmission element is displaceably supported on/in a guide rail such that it can be removed from the movement region taken up by the driver (3) and/or by the window pane (4) for the operation of the window pane (4) by displacement.

## Revendications

1. Module de porte (1, 30) avec un support (2, 31) et un système de lève-glace relié au support (2, 31) où le système de lève-glace comporte un entraîneur (3, 32) pour une vitre (4), un élément flexible linéaire relié à l'entraîneur (3, 32) et par le moyen duquel l'entraîneur (3, 32) peut être mû, et un bras (5, 34) muni d'un dispositif de déviation (6, 35) autour duquel l'élément flexible est dévié,
où le bras (5, 34) peut coulisser, en translation par rapport au support (2, 31), d'une position de montage en une position de travail,
**caractérisé en ce que** le bras (5, 34) se trouve, dans sa position de montage, à l'intérieur des limites du module, et **en ce que** le bras (5, 34) et le dispositif de déviation (6, 35) dépasse, en position de travail, du rebord du module.

2. Module de porte selon l'une des revendications précédentes **caractérisé en ce que** le module de porte comporte un rail de guidage (7, 33) relié au support (2, 31) sur lequel ou bien auquel est monté le bras (5, 34) coulissant selon une translation.

3. Module de porte selon l'une des revendications précédentes **caractérisé en ce que** le module de porte comporte un premier mécanisme de retenue par lequel le bras (5) est fixé ou peut être fixé en position de montage par rapport au support (2).

4. Module de porte selon la revendication 3 **caractérisé en ce que** le premier mécanisme de retenue est formé d'une première encoche (9) dans le rail de guidage (7), dans laquelle s'enclenche par complémentarité de forme un ergot de verrouillage (10) fixé solidement au bras (5).

5. Module de porte selon l'une des revendications précédentes, **caractérisé en ce que** le module de porte comporte un deuxième mécanisme de retenue, grâce auquel le bras (5, 34) est fixé ou peut être fixé dans sa position de travail relativement au support (2, 31).

6. Module de porte selon la revendication 5, **caractérisé en ce que** le deuxième mécanisme de retenue est constitué d'une deuxième encoche (11) dans le rail de guidage (7, 33), dans laquelle, en position de travail, un ergot de verrouillage (10, 39) fixé solidement au bras (5, 34) s'enclenche par complémentarité de forme.

7. Module de porte selon l'une des revendications précédentes, **caractérisé en ce que** le module de porte comporte un dispositif de transmission de force (12) qui, lorsqu'une vitre (4) est mise en place pour la première fois dans le système de lève-glace du module de porte et que la vitre (4) est pressée vers le bas, reporte la force sur le bras (5) capable de coulisser en translation, si bien que ce dernier est transféré de la position de montage à la position de travail.

8. Module de porte selon la revendication 7, **caractérisé en ce que** le dispositif de transmission de force est un élément de transmission (12) fixé au bras (5), contre lequel l'entraîneur (3) et / ou la vitre (4) peuvent jouer en vue de la transmission de la force.

9. Module de porte selon la revendication 8, **caractérisé en ce que** l'élément de transmission est monté de façon mobile sur le bras (5), si bien qu'après que le bras a atteint sa position de travail, tout particulièrement après qu'on aura levé la vitre ou l'entraîneur pour la première fois suite à cela, l'élément de transmission peut être ôté du domaine de mouvement requis par l'entraîneur (3) et / ou la vitre (4) pour l'actionnement de la vitre (4).

10. Module de porte selon la revendication 9, **caractérisé en ce que** l'élément de transmission est monté de façon rotative sur un axe (13), si bien qu'il peut être ôté par pivotement du domaine de mouvement requis par l'entraîneur (3) et / ou la vitre (4) pour l'actionnement de la vitre (4), ou bien que l'élément de transmission est monté sur / dans un rail de guidage sur lequel il peut coulisser, si bien qu'il peut être ôté par translation du domaine de mouvement requis par l'entraîneur (3) et / ou la vitre (4) pour l'actionnement de la vitre (4).
